(19) Europäisches Patentamt
European Patent Office
Office européen des brevets

(11) **EP 1 801 131 A1**

(12) **EUROPEAN PATENT APPLICATION**

(43) Date of publication:
**27.06.2007 Bulletin 2007/26**

(21) Application number: **05078019.6**

(22) Date of filing: **22.12.2005**

(51) Int Cl.:
***C08F 4/76*** *(2006.01)* ***C08F 10/00*** *(2006.01)*
***C07F 7/28*** *(2006.01)*

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **DSM IP Assets B.V.**
**6411 TE Heerlen (NL)**

(72) Inventors:
- **Zuideveld, Martin Alexander**
**6229 GD Maastricht (NL)**
- **Arts, Henricus Johannes**
**6151 JD Munstergeleen (NL)**
- **Ijpeij, Edwin Gerard**
**6136 JN Sittard (NL)**
- **Van Doremaele, Gerardus Henricus Josephus**
**6132 HN Sittard (NL)**

(74) Representative: **Mooij, Johannes Jacobus**
**DSM Intellectual Property**
**P.O. Box 9**
**6160 MA Geleen (NL)**

(54) **Zwitterionic cyclopentadienyl catalyst**

(57) The invention relates to metal-organic compound according to formula (1),

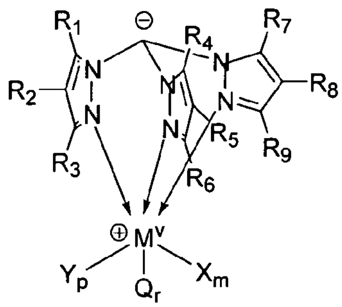

(1)

Wherein M is a group 4 metal with valency v, with v is 3 or 4, preferably Ti, Yp is a monoanionic cyclopentadienyl ligands with p = 1 or 2, $X_m$ is an anionic ligand with m = v - p - 1, being the number of anionic ligands and $Q_r$ is a coordinating ligand being a Lewis base with r ≥ 0 being the number of ligands, and $R^1$, $R^2$, $R^3$, $R^4$, $R^5$, $R^6$, $R^7$, $R^8$ and $R^9$ can independently be chosen from hydrogen atoms, optionally substituted alkyl or aryl groups having 1 to 20 carbon atoms.

The invention further relates to the use of the compound according to Formula (1) as a catalyst for the preparation of polyolefins.

EP 1 801 131 A1

## Description

The invention relates to a metal-organic compound and in particular to a metal-organic compound that can be used as a catalyst in the production of a polyolefin. Processes for the production of polyolefins typically employ a catalyst system comprising a metal-organic complex of a group 4 metal and an activator. Activators for single-site catalysts are fairly well known in the art. These activators often comprise a group 13 atom, such as boron or aluminum. Examples of these activators are described in Chem. Rev., 2000, 100, 1391 by E. Y-X. Chen and T.J. Marks. A preferred activator is a borane, or a borate anion or an alkylaluminoxane (e.g. methylaluminoxane (MAO)). However, alkylaluminoxane activators suffer from the disadvantage that these compounds have to be used in large excesses.

Borane or borate anion comprising activators require fluorine substitution for reasons of (i) polarisability of the anion and (ii) the stability of the anion as described in EP 0 277 004 A1. However the borate anion ligand may easily transfer one of its substituents to the strongly electrophilic metal cation, which deactivates the catalyst. E.g. a $C_6F_5^-$ group may transfer to the electrophilic metal cation, thus deactivating the catalyst.

In order to avoid the use of a co-catalyst, the synthesis of a compound containing a group 4 metal and a borate functionality in one molecule was described e.g. by Bochmann et al. (Organometallic, 2001, 2093). He describes the synthesis of compounds containing a catalyst comprising a group 4 metal in which the borate anion is part of the ligand structure, which is often referred to as zwitterionic, since the cation and the anion are linked in one molecule. These compounds however exhibit only moderate activity for polymerization of olefins.

Another disadvantage of the catalyst of Bochmann is its elaborate synthesis. The elaborate synthesis makes the catalyst expensive. A further disadvantage is the high fluorine content of these compounds, which requires the use of potentially explosive and expensive reagents for the synthesis of such compounds and leads to a high molecular weight catalyst system, which again increases catalyst costs.

It is an object of the invention to provide a catalyst system that does not require a cocatalyst, but is easier to synthesize than the catalyst described by Bochmann.

This object is achieved by a metal-organic compound according to Formula (1),

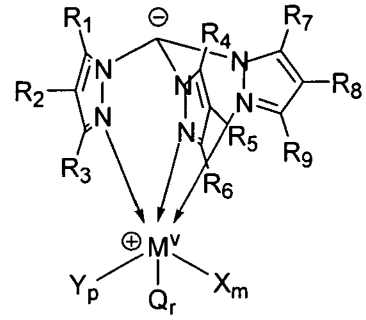

(1)

Wherein:

M is a group 4 metal with valency v being 3 of 4, preferably Ti

$Y_p$ is a monoanionic cyclopentadienyl ligand with p $\geq 1$ being the number of cyclopentadienyl ligands,

$X_m$ is an anionic ligand with m = $\geq 1$ and m = v - p -1 being the number of anionic ligands and

$Q_r$ is a coordinating ligand being a Lewis base with r $\geq 0$ being the number of ligands. wherein:

$R^1$, $R^2$, $R^3$, $R^4$, $R^5$, $R^6$, $R^7$, $R^8$ and $R^9$ can independently be chosen from hydrogen and, optionally substituted, hydrocarbyl groups having 1 to 20 carbon atoms.

The metal-organic compound according to Formula (1) provides a catalyst, which does not require a cocatalyst, and can be prepared easier and safer than the catalyst described by Bochmann et al.

JP 11 22 86 14 describes a catalyst for the polymerization of an olefin which is composed of (A) a transition metal compound of the formula $RB(Pr)_3M(Q)XL_n$ (e.g. t-butylimidochlorotitanium(pyridine)hydrotrispyrazolylborate) and (B) a cocatalyst selected from the group consisting of organoaluminumoxy compound, Lewis acid compounds (e.g. triphenyl borane) and ionic compounds. This catalyst still requires a cocatalyst in the form of organic aluminium oxy-compound, a Lewis acid compound or ion forming compound to form cationic complexes in a reaction with the transition metal compound. In the case of Al compounds as cocatalyst, the Al/transition metal atom ratio is preferably 5 to 1000.

In the catalyst of JP 11228614 the borate anion ligand comprises four substituents, which makes that the anion is sterically hindered.

However the borate anion ligand may easily transfer one of its substituents to the strongly electrophilic Ti cation, which deactivates the catalyst.

Surprisingly we have found that a metal-organic compound, wherein the negatively charged boron atom is replaced by a carbanion and the group 4 metal is substituted with a cyclopentadienyl ligand provides an active catalyst in olefin polymerisation.

The fact that in the reaction between tris(pyrazolyl)methane and a Ti cation results in a stabilised, naked $sp^3$-hybridized carbanion can be derived from Sally C Lawrence et al in Chem. Commun, 2001, 705-706. However, as opposed to the sterically hindered hydrotrispyrazolylborate ligands described in JP 11228614, it could not be foreseen that this sterically free carbanion would not coordinate strongly to the Ti cation, thus preventing the coordination of olefins necessary for a polymerisation process.

$Y_p$ is a cyclopentadienyl comprising ligand and comprises at least one cyclopentadienyl (Cp) ring. This ring may be substituted with at least one R'-group. When the Cp-ring is substituted with at least two R' groups, these R' groups may form at least one ring system. As result, the Cp-comprising ligand may be comprised of indenyl or fluorenyl groups.

The R' groups may each independently be hydrogen or a hydrocarbon radical with 1-20 carbon atoms (e.g. alkyl, aryl, biaryl, aralkyl, alkaryl and the like) or a heteroatom comprising moiety from group 13-17. Examples of such hydrocarbon radicals are methyl, ethyl, n-propyl, i-propyl, butyl (including isomers), hexyl (including isomers), decyl (including isomers), phenyl, biphenyl (including isomers) and the like. Examples of heteroatom comprising moieties of group 13-17 include borane radicals, silyl radicals, germyl radicals, stannyl radicals, amide radicals, phosphide radicals, oxide radicals, sulphide radicals, halide radicals, halide substituted hydrocarbyl radicals and the like. Also, two adjacent hydrocarbon radicals may be connected with each other in a ring system. Such a group as well may contain one or more R' groups as substituents. R' may also be a substituent which instead of or in addition to carbon and/or hydrogen may comprise one or more hetero-atoms of groups 13-17.

Suitable ligands Y are (substituted) cyclopentadienyl groups, (substituted)indenyl groups, (substituted)fluorenyl groups, (substituted) tetrahydroindenyl groups, (substituted) tetrahydrofluorenyl groups, (substituted) octahydrofluorenyl groups, (substituted) benzoindenyl groups, (substituted) heterocyclopentadienyl groups, (substituted) heteroindenyl groups, (substituted) heterofluorenyl groups, or its isomers. A hetero cyclopentadienyl group (in the following referred to as 'hetero ligand') is understood to be a group that has been derived from a cyclopentadienyl group, but in which at least one of the C atoms in the 5-ring of the cyclopentadienyl has been replaced by a hetero atom, which hetero atom may be chosen from group 14, 15 or 16. If there is more than one hetero-atom present in the 5-ring of the hetero ligand, these hetero-atoms may be either the same or different. More preferably, the hetero-atom has been chosen from group 15, while yet more preferably the hetero-atom is phosphorus.

In the metal-organic compound of the invention $X_m$ is an anionic ligand with $m \geq 1$, being the number of anionic ligands. Each anionic ligand, X, bonded to M, may be independently selected from the group consisting of hydride, halide, alkyl, silyl, germyl, aryl, amide, aryloxy, alkoxy, phosphide, sulfide, acyl, pseudo halides such as cyanide, azide, and acetylacetonate, or a combination thereof. Preferably, X is a hydride or a moiety selected from the group consisting of monoanionic spectator ligands, halide, alkyl, aryl, silyl, germyl, aryloxy, alkoxy, amide, siloxy and combinations thereof (e.g. alkaryl, aralkyl, silyl substituted alkyl, silyl substituted aryl, aryloxyalkyl, aryloxyaryl, alkoxyalkyl, alkoxyaryl, amidoalkyl, amidoaryl, siloxyalkyl, siloxyaryl, amidosiloxyalkyl, haloalkyl, haloaryl, etc.) having up to 20 non-hydrogen atoms.

Preferred anionic ligands X include halides and hydrocarbyl anions. A preferred halide is chloride. In one embodiment of the invention hydrocarbyl groups are anionically charged hydrocarbyl groups. In addition to the usual definition of a hydrocarbyl group, in this application a hydrocarbyl group also comprises a hydride group. The hydrocarbyl groups optionally contain heteroatoms of group 13-17. Preferred hydrocarbyl groups include hydride, alkyl-, aryl-, aralkyl-, alkaryl-, substituted vinyl- and substituted allylgroups. More preferred hydrocarbyl groups include hydride, alkyl-, aryl-, aralkyl- and alkaryl groups. Most preferred hydrocarbyl groups include alkyl-, aryl-, aralkyl- and alkaryl groups. Examples of such most preferred hydrocarbyl groups are methyl, benzyl, methyltrimethylsilyl, phenyl, methoxyphenyl, dimethoxyphenyl, N,N-dimethylaminophenyl, bis (N,N-dimethylamino) phenyl, fluorophenyl, difluorophenyl, trifluorophenyl, tetrafluoropheny, perfluorophenyl, trialkylsilylphenyl, bis (trialkylsilyl)phenyl, tris(trialkylsilyl)phenyl and the like.

In the metal-organic compound of the invention $Q_r$ is a coordinating ligand being a Lewis base with $r \geq 0$ being the number of ligands. The ligand Q may be present in the metal-organic compound for reasons of stability. If the ligand Q is present, Q is an ether, a thioether, a tertiary amine, a tertiary phosphane, an imine, or a bi-, or oligodentate, comprising an ether, a thioether, a tertiary amine, or a tertiary phosphane functional group, or combinations thereof.

Suitable ethers are tetrahydrofuran and diethylether. Suitable thioethers are thiophene, diethylsulfide, and dimethylsulfide. Suitable tertiary amines are trialkylamines, pyridine, bipyridine, TMEDA, and (-)-sparteine). Suitable tertiary phosphanes are triphenylphoshine, trialkylphosphanes. Suitable of imines are ketimines, guanidines, iminoimidazolidines, phosphinimines, amidines and the like. Suitable bidentate ligands are diimines, alkyl or aryldiphoshanes, dimethoxyethane. Suitable oligodentate ligands are triimines (such as tris (pyrazolyl)alkanes), cyclic multidentate ligands comprising heteroatoms of group 13-17, including crown ethers optionally having heteroatoms of group 13-17, azo-crown ethers optionally having heteroatoms of group 13-17, phospha-crown ethers optionally having heteroatoms of group 13-17, crown ethers having combinations of heteroatoms of group 15-16 optionally having heteroatoms of group 13-17 and crown ethers containing heteroatoms

of group 14-17 or combinations thereof.

The number of ligands (X and Q) depends on the valency of the metal and the stability of the metal-organic compound. The metal-organic compound may be monomeric, oligomeric or a cluster. The number of anionic ligands equals the valency of the metal used. The number of neutral ligands on the metal-organic reagent may range from 0 up to the amount that satisfies the 18-electron rule, as known in the art.

In the metal-organic compound of the invention the substitutes $R^1$, $R^2$, $R^3$, $R^4$, $R^5$, $R^6$, $R^7$, $R^8$ and $R^9$ can independently be chosen from hydrogen atoms and optionally substituted hydrocarbyl groups. Optionally the different R groups may form ring structures with each other. Examples of hydrocarbyl groups include methyl, ethyl, propyl, isopropyl, butyl and its isomers and $C_5$-$C_{20}$ alkyl groups including isomers, and aromatic hydrocarbyl groups. Examples of aromatic hydrocarbyl groups include phenyl, benzyl, biaryl, biphenyl, binaphyl and those substituted with an alkyl group as described above. Examples of optionally substited hydrocarbyl groups are alkyl or aryl groups having 1 to 20 carbon atoms as described above, optionally comprising one or more heteroatoms selected from group 13-17 of the periodic table. Preferably, when the substituents $R^1$, $R^2$, $R^3$, $R^4$, $R^5$, $R^6$, $R^7$, $R^8$ and $R^9$ comprise a heteroatom the substituents $R^1$, $R^2$, $R^3$, $R^4$, $R^5$, $R^6$, $R^7$, $R^8$ and $R^9$ are substituents comprising a heteroatom of group 15-16. Preferably this atom is selected from the group of nitrogen, phosphorus, oxygen or sulfur. Examples of such groups include amide, imide, phosphide, phospinimide, oxide, sulphide radical, optionally substituted with hydrocarbyl radicals or silyl radicals. Examples of such heteroatom comprising groups include trihydrocarbylsilyl groups such as trimethylsilyl, triethylsilyl, tripropylsilyl including isomers, tributylsilyl including isomers, $C_5$-$C_{20}$ alkylsilyl groups including isomers, optionally substituted with groups comprising a heteroatom of group 13-17 of the periodic table, triphenylsilyl, tribenzyl, trinaphtylsilyl, tribiphenylsilyl, and silyl groups having both alkyl and aryl substituents, hydrocarbyltrihydrocarbylsilyl, phenyl, methoxy, ethoxy, propoxy, isopropoxy, butoxy, $C_5$-$C_{20}$ alkoxy groups including isomers, phenoxy, benzyloxy, naphtoxy, biphenoxy, optionally substituted with groups comprising a heteroatom of group 13-17 of the periodic table including its isomers, methylsulphide, ethylsulphide, propylsulphide, isopropylsuphide, butylsuphide, $C_5$-$C_{20}$ sulphide groups including isomers, phenylsulphide, benzylsulphide, naphtylsulphide, biphenylsulphide, optionally substituted with groups comprising a heteroatom of group 13-17 of the periodic table including its isomers, dimethylamido, diethylamido, dipropylamido, diisopropylamido, dibutylamido including its isomers, $C_5$-$C_{20}$ diamido groups including isomers, diphenylamido, dibenzylamido, dinaphtylamido, dibiphenylamido, optionally substituted with groups comprising a heteroatom of group 13-17 of the periodic table including its isomers, hydrocarbyloxyaryl, methoxyphenyl, dimethoxyphenyl, phenoxyphenyl naphtoxyphenyl, biphenyloxyphenyl, thiohydrocarbylaryl, thioaryl, thioanisole, N,N-dihydrocarbylamidoaryl, N,N-dimethylaminophenyl, bis (N,N-dimethylamino)phenyl, trialkylsilylphenyl, bis(trialkylsilyl)phenyl, tris(trialkylsilyl)phenyl and the like.

The catalyst of the present invention can be prepared in a three-step process.

In a first step, a metal-organic precursor of formula (2):

$$M^vX_aQ_r \qquad (2)$$

wherein:

> M represents a group 4 metal with valency v is 3 or 4,
> a represents the number of the ligands X, with a ≥ 3
> r represents the number of the ligands Q, with r representing an integer ≥ 0, is contacted with b equivalents of a cyclopentadienyl ligand.

This results in a metal-organic first intermediate of formula (3):

$$M^vX_{(a-b)}Q_rY_b \qquad (3),$$

wherein

b represents the number of cyclopentadienyl ligands Y, with b = 1 or 2,

In a second step the thus formed first intermediate of Formula (3) is contacted with a tris(pyrazolyl) methane according to formula (4):

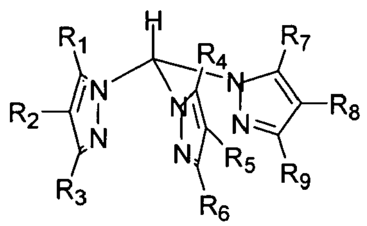

(4),

resulting in an second intermediate according to formula (5).

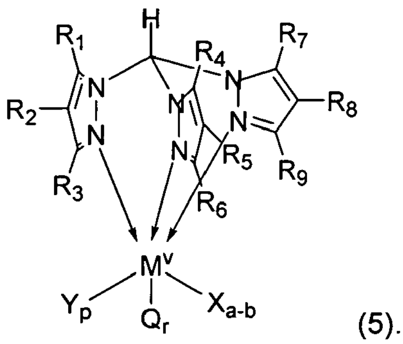

(5).

This second intermediate is contacted in a third step with a hydrocarbylating agent to the Zwitterionic metal-organic compound of formula 1.

The order wherein the cyclopentadienyl ligand and the tris(pyrazolyl)methane are added to the metal-organic precursor may be interchanged. This results in a process wherein the metal-organic precursor is first reacted with the tris(pyrazolyl)methane, which results in a metal-organic third intermediate of Formula (6)

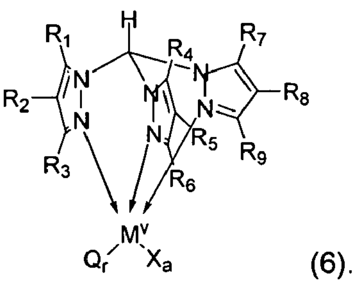

(6).

In a second step this third intermediate is contacted with b equivalents of a metal salt of a cyclopentadienyl ligand (YG), which results in the second intermediate according to Formula (5). This second intermediate is again contacted in a third step with a hydrocarbylating agent to the Zwitterionic metal-organic compound of formula (1).

In the processes of the invention the group G comprises a metal of group 1, 2, or 13 or a group comprising Si, Ge, Sn or Pb. If G represents a group with a metal of group 1, group G may further contain Lewis basic ligands as defined for L. If group G contains a metal of group 2, the group G contains a second anionic ligand. This anionic ligand may be another negatively charged cyclopentadienyl ligand or an anionic ligand as defined for X. If the group G contains an atom of group 13, this atom can further be substituted with two groups which each can be either a cyclopentadienyl-containing ligand or an anionic group as defined for X, or combinations thereof. If group G comprises an atom chosen from the series of Si, Ge, Sn or Pb, this atom can be substituted with three hydrocarbyl groups, optionally containing at least one hetero-atom of group 13 - 17.

If the metal-organic compound according to formula (1) comprises one or more halogen as anionic ligand X at least one has to be replaced in the third step by a hydrocarbyl group before becoming an active catalyst. The process for the preparation of the metal-organic compound is therefore optionally carried out in the presence of a hydrocarbylating agent. The hydrocarbylation process may be conducted in-situ in the polymerisation process. In this application, hydrocarbylating agents are understood to be nucleophilic groups comprising a metal-, or a metalloid-carbon or hydride bond. Suitable hydrocarbylating agents are: tri-, or tetrahydrocarbyl boron, tri-, or tetrahydrocarbyl aluminium, tri-, or tetrahydrocarbyl gallium, tri-, or tetrahydrocarbyl indium and di-, or tetrahydrocarbyl tin, or the reaction products of these hydrocarbylating agents with sterically hindered alcohols, thiols, amines or phosphanes.

Preferably the hydrocarbylating agent comprises a metal or a metalloid chosen from group 1, 2, 11, 12, 13 or 14. Examples of hydrides from metals or metalloids of group 1, 2, 11, 12, 13, 14 include: lithium hydride, sodium hydride, potassium hydride, calcium hydride, magnesium hydride, copper hydride, zinc hydride, cadmium hydride, borane, aluminium hydride, gallium hydride, silicon hydride, germanium hydride, and tin hydride.
More preferably the hydrocarbylating agent comprises Li, Mg, Zn, or Al.

Examples of Li comprising hydrocarbylating agents are methyllithium, phenyllithium, benzyllithium, biphenyllithium, naphtyllithium, lithio-dimethylresorcinol, and lithio-N,N-dimethylaniline.

Examples of magnesium comprising hydrocarbylating agents are methylmagnesiumhalide, phenylmagnesiumhalide, benzylmagnesiumhalide, biphenylmagnesiumhalide, naphtylmagnesiumhalide, tolylmagnesiumhalide, xylylmagnesiumhalide, mesitylmagnesiumhalide, dimethylresorcinolmagnesiumhalide, N,N-dimethylanilinemagnesiumhalide, dimethylmagnesium, diphenylmagnesium, dibenzylmagnesium, (biphenylene)magnesium, dinaphtylmagnesium, ditolylmagnesium, dixylylmagnesium, dimesitylmagnesium, bis (dimethylresorcinol)magnesium, and bis(N,N-dimethylaniline)magnesium.

Examples of aluminium comprising hydrocarbylating agents are compound containing one or more Al-O, Al-N or Al-P bonds, diisobutylaluminium hydride, $C_1$-$C_{20}$ trihydrocarbyl aluminium, and hydrocarbylaluminoxanes. A highly preferred compound is triisobutylaluminum.

The invention further relates to the use of the metal-organic compound according to the invention as catalyst for the preparation of polyolefins.

The process for the preparation of a polymer according to the invention is preferably carried out in a solvent. Suitable solvents or diluents include, but are not necessarily limited to, straight and branched-chain hydrocarbons such as $C_6$ - $C_{12}$ alkanes (e.g. hexane, heptane, pentamethyl heptane (PMH)); $C_6$ - $C_{12}$ cyclic and alicyclic hydrocarbons such as cyclohexane, cyclohep-

tane, methylcyclohexane; $C_6$ - $C_{12}$ aromatic and alkyl-substituted aromatic compounds such as benzene, toluene and xylene, and mixtures of the previous solvents or diluents. Compounds removing deactivating impurities from the solvent or the monomers may preferably added.

The complexes may be employed as homogeneous catalysts or supported on the surface of a suitable support such as alumina or silica for the preparation of polyolefins.

Such a polymerization can be conducted at a pressure ranging from 0.1 MPa to 10 MPa, preferably from 0.1 to 1 MPa.

## Claims

1. Metal-organic compound according to formula (1),

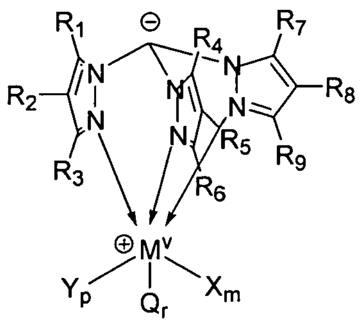

(1)

Wherein:

M is a group 4 metal with valency v, with v is 3 or 4, preferably Ti
$Y_p$ is a monoanionic cyclopentadienyl ligands with p is 1 or 2,
$X_m$ is an anionic ligand with m = ≥ 1, with m = v - p - 1, being the number of anionic ligands and $Q_r$ is a coordinating ligand being a Lewis base with r ≥ 0 being the number of ligands, and $R^1$, $R^2$, $R^3$, $R^4$, $R^5$, $R^6$, $R^7$, $R^8$ and $R^9$ can independently be chosen from hydrogen atoms, optionally substituted alkyl or aryl groups having 1 to 20 carbon atoms.

2. A heterogeneous catalyst comprising the metal-organic compound according to claim 1.

3. Use of the metal-organic compound according to claim 1 as a homogeneous catalyst, or the heterogeneous catalyst according to claim 2 as catalyst for the preparation of polyolefins.

European Patent Office

# EUROPEAN SEARCH REPORT

Application Number
EP 05 07 8019

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | WO 2005/123790 A (DSM IP ASSETS B.V.) 29 December 2005 (2005-12-29) * the whole document * ----- | 1-3 | INV. C08F4/76 C08F10/00 C07F7/28 |
| X | EP 0 816 386 A (ASAHI KASEI KOGYO KABUSHIKI KAISHA) 7 January 1998 (1998-01-07) * the whole document * ----- | 1-3 | |
| A | PATENT ABSTRACTS OF JAPAN vol. 1999, no. 03, 31 March 1999 (1999-03-31) -& JP 10 338698 A (UBE IND LTD), 22 December 1998 (1998-12-22) * abstract * ----- | 1-3 | |
| A | PATENT ABSTRACTS OF JAPAN vol. 1997, no. 12, 25 December 1997 (1997-12-25) -& JP 09 220476 A (UBE IND LTD), 26 August 1997 (1997-08-26) * abstract * ----- | 1-3 | TECHNICAL FIELDS SEARCHED (IPC) |
| A | BRUNKER T J ET AL: "Synthesis, structures, and redox properties of mixed-sandwich complexes of cyclopentadienyl and hydrotris(pyrazoly)borate ligands with first-row transisition metals" ORGANOMETALLICS, vol. 21, no. 15, 22 July 2002 (2002-07-22), pages 3123-3138, XP009067186 ISSN: 0276-7333 * complexes 8 and 9 * ----- | 1-3 | C08F C07F |
| | -/-- | | |

The present search report has been drawn up for all claims

| Place of search | Date of completion of the search | Examiner |
|---|---|---|
| Munich | 13 June 2006 | Elliott, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 05 07 8019

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ASCENSO J R ET AL: "Ring slippage in indenyl derivatives of molybdenum and tungsten" JOURNAL OF ORGANOMETALLIC CHEMISTRY, vol. 508, no. 1-2, 8 February 1996 (1996-02-08), pages 169-181, XP004206106 ISSN: 0022-328X * paragraph [04.2] * ----- | 1-3 | |
| A | O'SULLIVAN D J ET AL: "Metallocene analogues containing poly-1-pyrazolylborate or poly-1-pyrazolylmethane ligands and fully conjugated carbocyclic pi-acceptor ligands" JOURNAL OF ORGANOMETALLIC CHEMISTRY, vol. 57, no. 2, 1973, pages C58-C60, XP009067230 ISSN: 0022-328X * the whole document * ----- | 1-3 | TECHNICAL FIELDS SEARCHED (IPC) |

The present search report has been drawn up for all claims

| Place of search | Date of completion of the search | Examiner |
|---|---|---|
| Munich | 13 June 2006 | Elliott, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 05 07 8019

This annex lists the patent family members relating to the patent documents cited in the above-mentioned European search report. The members are as contained in the European Patent Office EDP file on
The European Patent Office is in no way liable for these particulars which are merely given for the purpose of information.

13-06-2006

| Patent document cited in search report | | Publication date | Patent family member(s) | Publication date |
| --- | --- | --- | --- | --- |
| WO 2005123790 | A | 29-12-2005 | NONE | |
| EP 0816386 | A | 07-01-1998 | NONE | |
| JP 10338698 | A | 22-12-1998 | NONE | |
| JP 09220476 | A | 26-08-1997 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0277004 A1
- JP 11228614 A
- JP 11228614 B


### Non-patent literature cited in the description


- **E. Y-X. CHEN ; T.J. MARKS.** *Chem. Rev.,* 2000, vol. 100, 1391
- **BOCHMANN et al.** *Organometallic,* 2001, 2093
- **SALLY C LAWRENCE et al.** *Chem. Commun,* 2001, 705-706